# EUROPEAN PATENT APPLICATION

(11) **EP 4 793 203 A1**
(43) Date of publication of application: **19.08.2026**
(21) Application number: 24876191.8
(22) Date of filing: 02.08.2024
(51) Int. Cl.: B65G 1/04

(54) **CONTAINER TAKEOUT/PLACEMENT SYSTEM, CONTAINER TAKEOUT/PLACEMENT METHOD, AND WAREHOUSING SYSTEM**

(30) Priority: 09.10.2023 CN 202311303734; 09.10.2023 CN 202311302706
(71) Applicant: Beijing Geekplus Technology Co. Ltd, Beijing 100102 (CN)
(72) Inventor: XIE, Liang, Beijing 100102 (CN); YAN, Jie, Beijing 100102 (CN); SUN, Qin, Beijing 100102 (CN)
(74) Representative: Manna, Sara
(86) International application number: PCT/CN2024/109525
(87) International publication number: WO 2025/077371

(57) **Abstract**

A container takeout/placement system, a container takeout/placement method, and a warehousing system. The warehousing system comprises: a carrier parking area (30) used for parking of a carrier (31), wherein a container is carried on the carrier (31); a docking area (40); and a container loading and unloading device (10), wherein the carrier parking area (30) and the docking area (40) are respectively located on two sides of the container loading and unloading device (10); the container loading and unloading device (10) comprises a carrying assembly (101), the carrying assembly (101) being configured to convey the container between the docking area (40) and the carrier (31), and a container takeout/placement assembly (102), the container takeout/placement assembly (102) being configured to be fitted with and disengaged from a fitting position on a sidewall (20a) of the container so as to load and unload the container; the fitting position on the container is located in a preset area (M) of the sidewall (20a), and the orthographic projection of the center of gravity of the container on the sidewall (20a) is located in the preset area (M).

## Description

### CROSS-REFERENCE TO RELATED APPLICATIONS

This application claims priority to Chinese Patent Application No. 202311303734.2, filed on October 09, 2023, and Chinese Patent Application No. 202311302706.9, filed on October 09, 2023. The entire disclosures of the above-identified CN applications are incorporated herein by reference.

### TECHNICAL FIELD

The present disclosure relates to the technical field of logistics, and in particular, to a container pick-and-place system, a container pick-and-place method, and a warehousing system.

### BACKGROUND

In a goods-to-person warehousing and logistics system, in the case of a demand for container inbound or outbound, containers to be stored may be delivered to an operation workbench and then loaded onto a carrier via a container load-and-unload device to complete container inbound; while in the case of a demand for container outbound, containers are unloaded from the carrier via the container load-and-unload device and transferred to the operation workbench to complete container outbound.

### SUMMARY

In view of this, the present disclosure provides in embodiments a container pick-and-place system, a container pick-and-place method, and a warehousing system, which can reduce the container pick-and-place failure rate.

According to a first aspect of embodiments of the present disclosure, there is provided a container pick-and-place system, including a container load-and-unload device, wherein the container load-and-unload device includes:
a carrying assembly, configured to convey a container at least in a direction from one side of the container load-and-unload device to the other side of the container load-and-unload device; and
a container pick-and-place assembly, configured to engage with and disengage from an engagement position on a side wall of the container to load and unload the container respectively,
wherein the engagement position is located within a preset area of the side wall, and an orthographic projection of the center of gravity of the container on the side wall is located within the preset area.

According to a second aspect of embodiments of the present disclosure, there is provided a container pick-and-place method, wherein during a conveyance of a container from a first side to a second side via a conveying mechanism, a container pick-and-place assembly is controlled by a control unit to remain in an engaged state before reaching a first preset position, and to switch from the engaged state to a disengaged state when the container reaches the first preset position, so as to pick up the container from the first side and place it onto the conveying mechanism.

According to a third aspect of embodiments of the present disclosure, there is provided a warehousing system, including:
a carrier parking area for parking a carrier carrying a container;
a docking area; and
a container pick-and-place system according to embodiments as described above, wherein the carrier parking area and the docking area are respectively located at two sides of a container load-and-unload device, a carrying assembly is configured to convey the container between the docking area and the carrier, and a container pick-and-place assembly is configured to load and unload the container between the carrier and the carrying assembly and/or between the docking area and the carrying assembly.

### BRIEF DESCRIPTION OF THE DRAWINGS

Fig. 1 is a schematic diagram illustrating a distribution of a preset area on a side wall of a container according to an embodiment of the present disclosure;
Fig. 2 is a block diagram illustrating a principle of a warehousing system according to an embodiment of the present disclosure;
Fig. 3 is a schematic diagram illustrating a structure of a warehousing system according to an embodiment of the present disclosure;
Fig. 4 is a schematic diagram illustrating a structure assembled of a container pick-and-place assembly and a carrying assembly in a container load-and-unload device in a warehousing system, according to an embodiment of the present disclosure;
Fig. 5 is a schematic diagram illustrating a three-dimensional structure, from one perspective, of a container pick-and-place assembly of a container load-and-unload device in a container pick-and-place system, according to an embodiment of the present disclosure;
Fig. 6 is a schematic diagram illustrating a three-dimensional structure, from another perspective, of a container pick-and-place assembly of a container load-and-unload device in a warehousing system, according to an embodiment of the present disclosure;
Fig. 7 is a front structural view of a container pick-and-place assembly, in an engaged state, of a container load-and-unload device in a warehousing system, according to an embodiment of the present disclosure;
Fig. 8 is a front structural view of a container pick-and-place assembly, in a disengaged state, of a container load-and-unload device in a warehousing system, according to an embodiment of the present disclosure;
Fig. 9 is a schematic diagram illustrating a three-dimensional structure, from one perspective, of a container pick-and-place assembly of a container load-and-unload device in a container pick-and-place system, according to another embodiment of the present disclosure;
Fig. 10 is a schematic diagram illustrating a three-dimensional structure, from another perspective, of a container pick-and-place assembly of a container load-and-unload device in a container pick-and-place system, according to an embodiment of the present disclosure;
Fig. 11 is a front view of a container pick-and-place assembly of a container load-and-unload device in a container pick-and-place system, according to another embodiment of the present disclosure;
Fig. 12 is a right view of a container pick-and-place assembly of a container load-and-unload device in a container pick-and-place system, according to another embodiment of the present disclosure;
Fig. 13 is a left view of a container pick-and-place assembly of a container load-and-unload device in a container pick-and-place system, according to another embodiment of the present disclosure;
Fig. 14 is a top view of a container pick-and-place assembly of a container load-and-unload device in a container pick-and-place system, according to another embodiment of the present disclosure;
Fig. 15 is a schematic diagram showing projection distributions of suction cups on a preset area of a container when an actuating mechanism of a container pick-and-place assembly in a warehousing system contains a plurality of suction cups, according to an embodiment of the present disclosure.

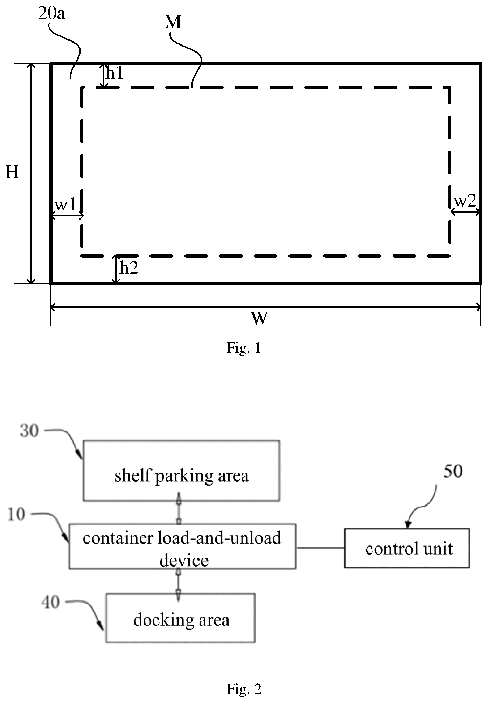

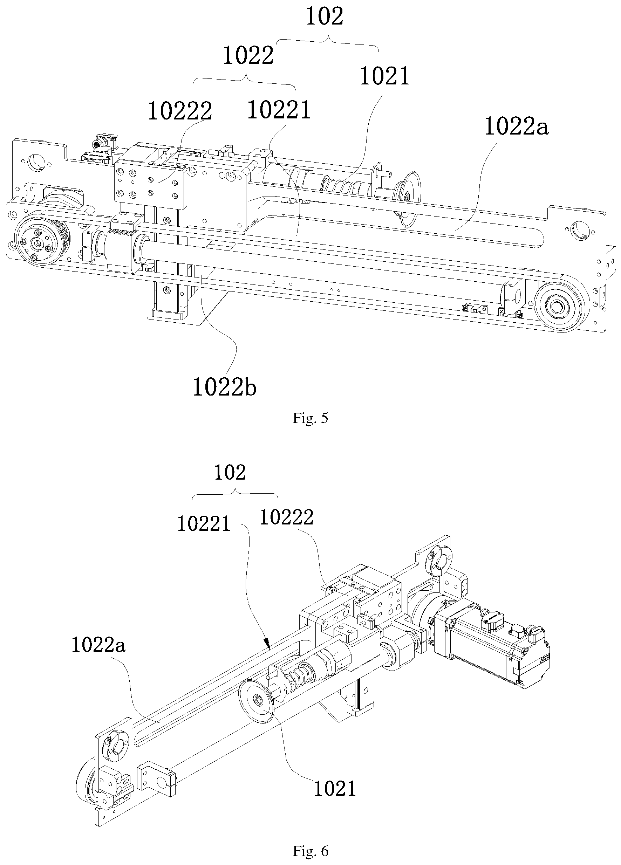

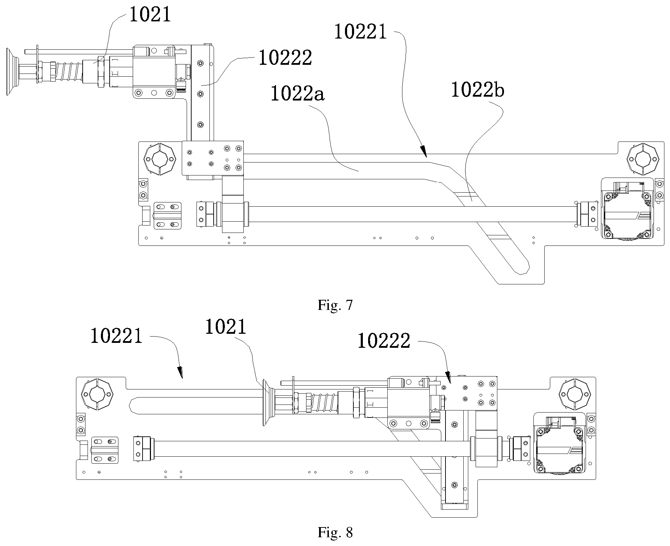

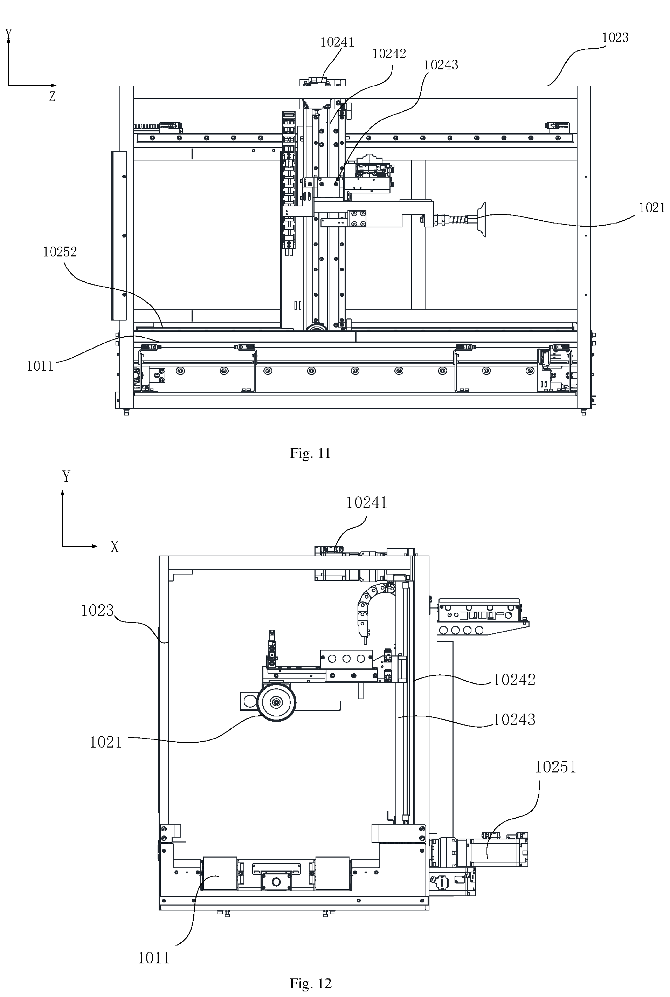

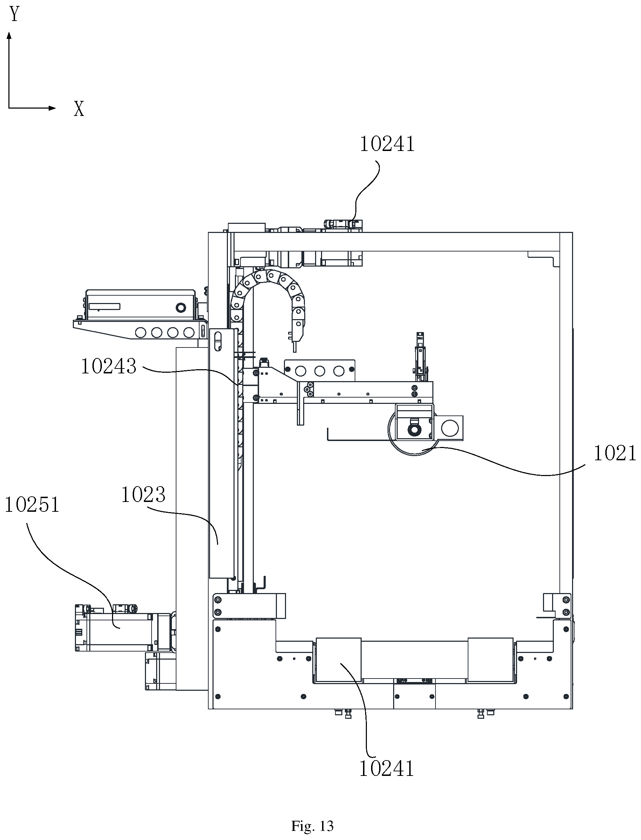

The one-to-one correspondence between component names and reference numerals in Figs. 1 to 15 is as follows:
10: container load-and-unload device; 30: carrier parking area; 31: carrier; 40: docking area; 50: control unit; 101: carrying assembly; 102: container pick-and-place assembly; 100: moving mechanism; 103: frame body; 1031: X-axis rail; 1032: Y-axis rail; 104: detection assembly; 1011: conveying mechanism; 101A: first side; 101B: second side; 1012: passage space; 1041: first sensor; 20a: side wall; 1021: actuating mechanism; 1022: movement mechanism; 10221: guide mechanism; 1022a: first guide portion; 1022b: second guide portion; 10222: sliding unit; 1023: support frame; 1024: first moving assembly; 10241: first drive motor; 10242: first support member; 10243: first transmission member; 1025: second moving assembly; 10251: second drive motor; 10252: second support member; 10253: second transmission member; M: preset area.

### DETAILED DESCRIPTION

The present disclosure provides in embodiments a container pick-and-place system including a container load-and-unload device, where the container load-and-unload device includes:
a carrying assembly, configured to convey a container at least in a direction from one side of the container load-and-unload device to the other side of the container load-and-unload device; and
a container pick-and-place assembly, configured to engage with and disengage from an engagement position on a side wall of the container to load and unload the container respectively,
where the engagement position on the container is located within a preset area of the side wall, and the orthographic projection of the center of gravity of the container on the side wall is located within the preset area.

In the above embodiments, the container load-and-unload device may convey a container between the carrier parking area and the docking area, and the two sides of the container load-and-unload device correspond to the carrier parking area and the docking area respectively (the container entries into and exits from the container load-and-unload device occur on different sides of the container load-and-unload device); or one side of the container load-and-unload device may correspond to both the carrier parking area and the docking area (the container entries into and exits from the container load-and-unload device occur on the same side of the container load-and-unload device). The container load-and-unload device includes the carrying assembly and the container pick-and-place assembly, and the carrying assembly may carry a container and convey the container at least in a direction from one side of the container load-and-unload device to the other side of the container load-and-unload device. In embodiments where the container entries into and exits from the container load-and-unload device occur on different sides of the container load-and-unload device, the carrying assembly may convey a container from one side of the container load-and-unload device to the other side; in embodiments where the container entries into and exits from the container load-and-unload device occur on the same side of the container load-and-unload device, the carrying assembly may first convey a container in a direction from one side of the container load-and-unload device to the other side, and then convey the container in a direction from the other side of the container load-and-unload device to the one side.

The container pick-and-place assembly is configured to be able to engage with and disengage from the engagement position on the side wall of a container to load and unload the container respectively, such as picking up a container located at the carrier parking area and loading it onto the carrying assembly, or pushing a container located on the carrying assembly onto the carrier parking area. The engagement position between the container pick-and-place assembly and the side wall of the container is located within a preset area, and the orthographic projection of the center of gravity of the container on the side wall of the container is located within the preset area. That is, the engagement position between the container pick-and-place assembly and the side wall of the container may be regarded as being located in a sweet spot of the side wall of the container, such that the container pick-and-place assembly applies a force to the container on a position as close as possible to the center of gravity of the container, thus to ensure smoother pulling or pushing of the container by the container pick-and-place assembly, thereby reducing the container pick-and-place failure rate.

The present disclosure provides in embodiments a warehousing system, including:
a carrier parking area for parking a carrier carrying a container;
a docking area; and
a container load-and-unload device, where the carrier parking area and the docking area are respectively located at two sides of the container load-and-unload device, where the container load-and-unload device includes:
   a carrying assembly, configured to convey the container between the docking area and the carrier; and
   a container pick-and-place assembly, configured to load and unload the container between the carrier and the carrying assembly and/or between the docking area and the carrying assembly,
where an engagement position on the container is located within a preset area of the side wall, and the orthographic projection of the center of gravity of the container on the side wall is located within the preset area.

In the above embodiments, the container load-and-unload device may convey a container between the carrier parking area and the docking area, and the container load-and-unload device includes the carrying assembly capable of carrying and conveying the container and the container pick-and-place assembly configured to be able to engage with the engagement position on the side wall of the container, to pick up a container located on a carrier and load it onto the carrying assembly, push a container located on the carrying assembly onto the carrier, pick up a container located at the docking area and load it onto the carrying assembly, or push a container located on the carrying assembly into the docking area. The engagement position between the container pick-and-place assembly and the side wall of the container is located within a preset area, and the orthographic projection of the center of gravity of the container on the side wall of the container is located within the preset area. That is, the engagement position between the container pick-and-place assembly and the side wall of the container may be regarded as being located in a sweet spot of the side wall of the container, such that the container pick-and-place assembly applies a force to the container on a position as close as possible to the center of gravity of the container, thus to ensure smoother pulling or pushing of the container by the container pick-and-place assembly, thereby reducing the container pick-and-place failure rate.

In order to facilitate the understanding, reference will now be made in detail to an embodiment for the specific structure and working principle of a warehousing system of the present disclosure with reference to Figs. 1 to 15.

As shown in Fig. 2 to Fig. 14, a container pick-and-place system provided in embodiments of the present disclosure includes a container load-and-unload device 10 and a control unit 50, where the container load-and-unload device 10 includes a carrying assembly 101 and a container pick-and-place assembly 102. The carrying assembly 101 has two opposite sides, denoted as a first side 101A and a second side 101B. The carrying assembly 101 includes a conveying mechanism 1011 configured to convey a container at least in a direction from the first side 101A to the second side 101B.

In some embodiments of the present disclosure, the warehousing system further includes a carrier parking area 30 and a docking area 40, where the carrier parking area 30 and the docking area 40 may be respectively located at two sides of the container load-and-unload device. It should be noted here that the carrier parking area 30 and the docking area 40 may be respectively located at two opposite sides of the container load-and-unload device, or at two adjacent sides of the container load-and-unload device.

In an embodiment of the present disclosure, the carrier parking area 30 may be located at the first side 101A of the conveying mechanism 1011, and the carrier parking area 30 is configured for parking a carrier 31, which is configured to carry a container. The docking area 40 may be disposed at the second side 101B of the conveying mechanism 1011.

In an embodiment of the present disclosure, the docking area 40 may be configured to include a workstation, which may be provided with at least one picking station. In other embodiments, the docking area 40 may also include a conveying line, or a robot performing other tasks, such as a belt robot or other carriers carrying cargo boxes.

The container load-and-unload device 10 may be controlled by the control unit 50 to pick up a container on the carrier 31 located at the carrier parking area 30 and load it onto the conveying mechanism 1011, or push a container located on the conveying mechanism 1011 of the carrying assembly 101 onto the carrier 31.

Containers in embodiments of the present disclosure are mainly containers used for loading goods in logistics, including but not limited to work bins, pallets, packaging boxes, etc., which are not limited herein.

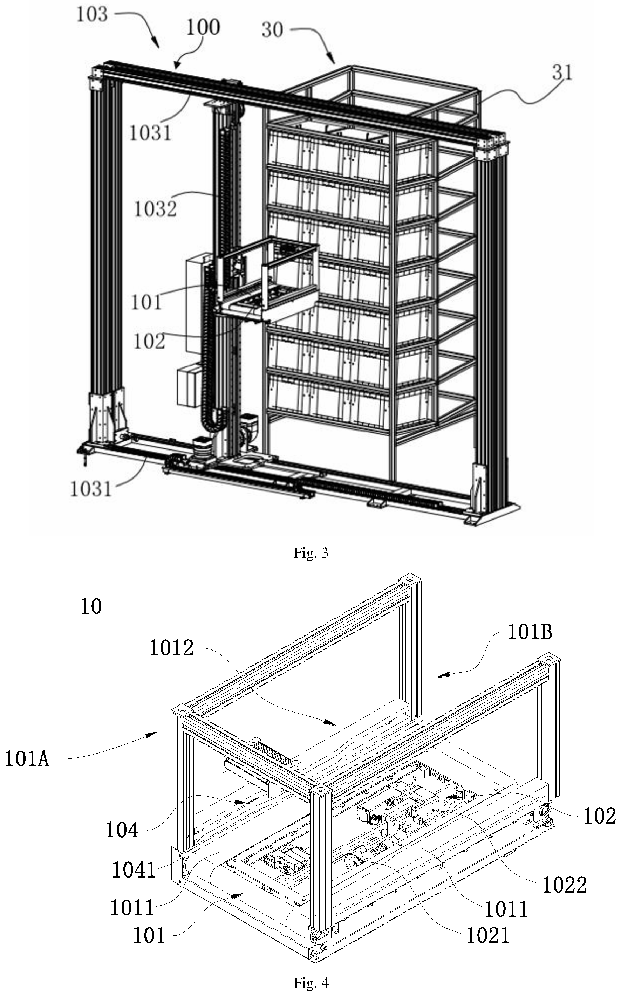

As shown in Fig. 4, the carrying assembly 101 may have a passage space 1012 for a container to move through. When transferred between the first side 101A and the second side 101B, the container could pass through the passage space 1012. The passage space 1012 specifically refers to a space occupied by the movement of the container when conveyed by the carrying assembly.

The container pick-and-place assembly 102 is configured to have an engaged state and a disengaged state. In the engaged state, the container pick-and-place assembly 102 is configured to pick up a container located on the carrier 31 and transfer it onto the conveying mechanism 1011, or push a container located on the conveying mechanism 1011 onto the carrier 30. In the disengaged state, the container pick-and-place assembly 102 is configured to disengage from the container.

In some embodiments, in the engaged state, the container pick-and-place assembly 102 is configured to engage with a side wall 20a of the container in any suitable manner such as snap-fitting, suction via a suction cup, or gripper grasping. The engagement position between the container pick-and-place assembly 102 and the side wall 20a of the container refers to a force application position where the container pick-and-place assembly 102 applies a force to the container. Taking the container pick-and-place assembly 102 engaging with the container by suction via a suction cup as an example, the engagement position is the suction position of the suction cup.

An inappropriate engagement position between the container pick-and-place assembly 102 and the container may lead to a container pick-and-place failure. Therefore, in embodiments provided by the present application, the engagement position between the container pick-and-place assembly 102 and the side wall 20a of the container is configured to be located within a preset area M, and the orthographic projection of the center of gravity of the container on the side wall 20a of the container is located within the preset area M, thus to reduce the container pick-and-place failure rate. That is, the engagement position between the container pick-and-place assembly 102 and the side wall 20a of the container may be regarded as being located in a sweet spot of the side wall of the container, such that the container pick-and-place assembly 102 applies a force to the container on a position as close as possible to the projection point of the center of gravity of the container in the preset area, thus to ensure smoother pulling or pushing of the container by the container pick-and-place assembly 102, thereby reducing the container pick-and-place failure rate.

In an embodiment of the present disclosure, along the conveying direction of the carrying assembly, the engagement position is located on a side wall 20a of the container corresponding to the container pick-and-place assembly 102. Taking the conveying direction of the carrying assembly as a Z-axis, the engagement position, along the Z-axis, is located on a side wall 20a of the container close to the docking area 40. In other words, taking the forward movement direction of the container as the front, when a container is transferred from the carrier 32 onto the conveying mechanism 1011 of the carrying assembly 101, the engagement position is located on the front side wall of the container; when a container located on the conveying mechanism 1011 is transferred onto the conveying mechanism 1011 of the carrying assembly 101, the engagement position is located on the rear side wall of the container. This facilitates the pulling or pushing of the container by the container pick-and-place assembly 102, and is more conducive to the movement stability of the container and spatial layout compared with solutions where the container pick-and-place assembly 102 pulls or pushes other side walls of the container.

In an embodiment of the present disclosure, when a container is loaded onto the carrying assembly 101, the container has opposite top and bottom in a vertical Y-axis direction, and the center of the preset area M is offset toward the bottom relative to the center of the side wall 20a. That is, the engagement position between the container pick-and-place assembly 102 and the container may be located within the preset area M and at a lower middle position, which is more conducive to the stability of the container during movement.

It should be noted that for different types of containers, the distribution position and area of the preset area M may be adjusted according to container information such as the shape, size and weight of the container.

In an embodiment of the present disclosure, as shown in Fig. 1, the preset area M is configured to be located in a middle area of the side wall 20a, and the preset area M is configured to satisfy the following conditions: $h 1 / H \geq 1 / 5 ;$ $h 2 / H \geq 1 / 10 ;$ $w 1 / W \geq 1 / 10 ;$ $w 2 / W \geq 1 / 10 ,$ where,
h1 is a distance between a top boundary of the preset area M and a top edge of the side wall 20a in the Y-axis direction;
h2 is a distance between a bottom boundary of the preset area M and a bottom edge of the side wall 20a in the Y-axis direction;
H is a height of the side wall 20a in the Y-axis direction;
W is a width of the side wall 20a in a X-axis direction; and
w1 and w2 are respective distances between two side boundaries of the preset area M and two side boundaries of the side wall 20a corresponding thereto in the X-axis direction,
where the carrying assembly conveys the container along a Z-axis direction, the X-axis, Y-axis and Z-axis being perpendicular to each other.

In this way, the centers of gravity of various types of containers could be generally distributed within the preset area M and the engagement position could be located within the preset area M, which ensure smooth pick-and-place of various types of containers.

In an embodiment of the present disclosure, as shown in Fig. 2, the carrying assembly includes a passage space 1012 for carrying a container; the container pick-and-place assembly 102 includes an actuating mechanism 1021 and a movement mechanism 1022, where the actuating mechanism 1021 is configured to be able to perform a connecting action for connecting to a container or a releasing action for releasing a container. The actuating mechanism 1021 may include components such as snaps, suction cups, and magnetic attachments that may perform connecting or releasing actions with the container. In the engaged state, the actuating mechanism 1021 may perform a connecting action to engage with the container, while in the disengaged state, the actuating mechanism 1021 may perform a releasing action to disengage from the container.

The actuating mechanism 1021 is with movement trajectories including a first movement trajectory and a second movement trajectory, and the movement mechanism 1022 is a movement component that drives the actuating mechanism 1021 to move in the first movement trajectory and the second movement trajectory; the container pick-and-place assembly 102 may further include a drive assembly that drives the movement mechanism 1022 to move.

When the drive assembly drives the movement mechanism 1022 to move in the first movement trajectory, the movement mechanism 1022 is configured to drive the actuating mechanism 1021 to move in the passage space 1012 of the carrying assembly 101, and load a container at a first target position onto the carrying assembly 101 or unload a container from the carrying assembly 101 and place it at a second target position through reciprocating movements such as extension and retraction. The first target position and the second target position may be corresponding container positions on the carrier 31. The first target position and the second target position may be the same container position or different container positions, which are not limited herein.

When the drive assembly drives the movement mechanism 1022 to move in the second movement trajectory, the movement mechanism 1022 is configured to drive the container pick-and-place assembly to avoid the passage space 1012 of the carrying assembly 101, such that the container could pass through the passage space 1012 of the carrying assembly 101.

According to the container pick-and-place assembly 102 in embodiments of the present disclosure, in the first movement trajectory, the movement mechanism 1022 drives the actuating mechanism 1021 to move in the passage space 1012 of the carrying assembly 101 to load and unload a container; in the second movement trajectory, the movement mechanism 1022 drives the actuating mechanism 1021 to avoid the passage space 1012 of the carrying assembly 101, such that a container could be accommodated in the passage space 1012 or move in the passage space 1012. According to the container pick-and-place assembly 102 in embodiments of the present disclosure, the actuating mechanism 1021 does not occupy the space of the carrying assembly 101, enabling the structure of the container pick-and-place assembly 102 to be more compact and adaptable to narrow working spaces.

In the above embodiments, containers may be conveyed between two sides of the carrying assembly, which serve as pick-and-place ports respectively. To enable containers to smoothly pass through the passage space 1012 on the carrying assembly 101, the movement mechanism 1022 drives the actuating mechanism 1021 to avoid the passage space 1012.

In another embodiment of the present disclosure, the carrying assembly 101 includes a passage space 1012 for a container to move through, with one side of the passage space 102 provided with a pick-and-place port; the container pick-and-place assembly includes: an actuating mechanism 1021, configured to be able to perform a connecting action for connecting to a container or a releasing action for releasing a container; and a movement mechanism 1022, configured to drive the actuating mechanism 1021 to reciprocate in the passage space 1012 to load and unload a container through the pick-and-place port. In the above embodiments, a container may enter and exit the passage space 1012 through the same pick-and-place port (the container entries into and exits from the container load-and-unload device occur on the same side of the container load-and-unload device) to load and unload the container. At this time, the actuating mechanism 1021 may be disposed at the opposite side of the pick-and-place port, such that the movement mechanism 1022 could reciprocate in the passage space 1012 to load and unload containers through the same pick-and-place port, while the movement mechanism 1022 does not need to avoid the passage space 1012.

In an embodiment of the present disclosure, the container load-and-unload device further includes a moving mechanism 100, configured to be able to move the container pick-and-place assembly 102 in the X-axis direction and the Y-axis direction, such that the actuating mechanism 1021 corresponds to the preset area M of the container.

In an embodiment of the present disclosure, as shown in Fig. 3, the moving mechanism 100 further includes a frame body 103, which includes an X-axis rail and a Y-axis rail perpendicular to each other, and the container pick-and-place assembly 101 is configured to move via the X-axis rail 1031 and the Y-axis rail 1032, such that the actuating mechanism 1021 corresponds to the preset area M of the container. The X-axis rail 1031 and the Y-axis rail 1032 are disposed on a vertical plane.

In some embodiments of the present disclosure, the Y-axis rail 1032 is configured to move along the X-axis rail 1031, and the container pick-and-place assembly 102 is configured to move along the Y-axis rail 1032. A movement component 4 is configured to drive the actuating mechanism 1021 to move along the Z-axis direction in the first movement trajectory, and the X-axis, Y-axis and Z-axis form a three-dimensional coordinate system.

The frame body 7 is further provided with a drive system, including an X-axis drive unit driving the Y-axis rail 1032 to move along the X-axis rail 1031and a Y-axis drive unit driving the container pick-and-place assembly to move along the Y-axis rail 1032, thereby moving the container pick-and-place assembly 102 to a corresponding position, such as a position corresponding to a target position on the carrier 31. The drive system may include a drive motor, transmission gear, transmission chain, lead screw assemblies, etc., which could be set by those skilled in the art based on the related art to achieve the above functions of the drive system.

In an embodiment of the present disclosure, there may be provided with at least two Y-axis rails 1032, which move independently between the upper and lower X-axis rails 1031. Each Y-axis rail is provided with at least one container pick-and-place assembly 102 that is independently movable, improving the working efficiency of the container load-and-unload device.

In the embodiment, the container load-and-unload device is used to transfer containers on a carrier, and the container pick-and-place assembly 102 may move, on the frame body 7 along the X-axis rail 1031 and the Y-axis rail 1032, to a target position of the carrier 31.

According to the warehousing system provided by embodiments of the present disclosure, by moving the container pick-and-place assembly 102 on a vertical plane along the X-axis rail 1031 and the Y-axis rail 1032 of the frame body, the container pick-and-place assembly 102 could move to such a position that the actuating mechanism 1021 corresponds to the preset area M of the container, and the actuating mechanism 1021 is exactly at the optimal position to perform the connecting action.

In another embodiment of the present disclosure, the moving mechanism 100 may further include: a base member, and a robotic arm mounted thereon and connected to the container pick-and-place assembly 102, where through the robotic arm, the container pick-and-place assembly 102 may be driven to move along the X-axis direction and the Y-axis direction. The base member may be fixed on the ground and/or rails.

In another embodiment of the present disclosure, the container pick-and-place assembly 102 includes at least two actuating mechanisms 1021, which are configured to synchronously perform a connecting action or a releasing action; after the container pick-and-place assembly 102 as configured moves in the X-axis direction and the Y-axis direction to render the actuating mechanism 1021 corresponding to the preset area M of the container, the at least two actuating mechanisms 1021 are configured to synchronously perform a connecting action or a releasing action. In this way, by adjusting the position of the container pick-and-place assembly 102, it is able to move the actuating mechanism 1021 to a position corresponding to the preset area M of the container, and to control each actuating mechanism 1021 to perform a connecting action to engage with the engagement position of the container.

In another embodiment of the present disclosure, the container pick-and-place assembly 102 includes at least two actuating mechanisms 1021, at least a part of which is configured to be capable of independently performing a connecting action or a releasing action; after the container pick-and-place assembly 102 as configured moves in the X-axis direction and the Y-axis direction to render the actuating mechanism 1021 corresponding to the preset area M of the container, only the actuating mechanism 1021 corresponding to the engagement position performs a connecting action. In this way, taking the actuating mechanism 1021 including suction cups as an example, when there are multiple suction cups, in the engaged state, only the suction cup at the optimal position is vacuumized to suck the container, while suction cups at other positions do not need to be vacuumized.

In some embodiments, as shown in Figs. 4 to 8, the movement mechanism 1022 includes: a guide unit 10221 and a sliding unit 10222.

As shown in Figs. 4 to 8, the guide unit 10221 includes a first guide portion 1022a and a second guide portion 1022b connected to each other. The first guide portion 1022a and the second guide portion 1022b define the first movement trajectory and the second movement trajectory of the movement mechanism 1022 respectively. The first guide portion 1022a may be configured to extend linearly along the Z-axis parallel to the conveying direction of the conveying mechanism 1011, and the second guide portion 1022b may be configured to be in a different direction from the first guide portion 1022a. The sliding unit 10222 cooperates with the guide unit 10221 and may move along the first guide portion 1022a and the second guide portion 1022b. Since the actuating mechanism 1021 is connected to the sliding unit 10222, when the sliding unit 10222 moves along the first guide portion 1022a and the second guide portion 1022b, the actuating mechanism 1021 may be driven to move along the first movement trajectory and the second movement trajectory.

Since the second guide portion 1022b is in a different direction from the first guide portion 1022a, during the sliding unit 10222 moving along the first guide portion 1022a, the actuating mechanism 1021 may be driven to move linearly along the Z-axis in the passage space 1012 of the carrying assembly 101, to load the container onto the carrying assembly 101 along the Z-axis direction; and after the sliding unit 10222 moving along the first guide portion 1022a to the second guide portion 1022b, the actuating mechanism 1021 may be driven to move in a manner gradually leaving the passage space 1012, until the actuating mechanism 1021 is located outside the passage space 1012 of the carrying assembly 101.

In an embodiment of the present disclosure, the second guide portion 1022b is configured to be located above the first guide portion 1022a. Specifically, the first guide portion 1022a extends linearly along the Z-axis, the second guide portion 1022b is located in the same vertical plane as the first guide portion 1022a, and the second guide portion 1022b extends obliquely upward relative to the first guide portion 1022a, forming an obtuse included angle between the two guide portions. When the sliding unit 10222 moves in place along the second guide portion 1022b, the actuating mechanism 1021 is configured to move above the carrying assembly 101 to leave the passage space of the carrying assembly 101.

In another embodiment of the present disclosure, as shown in Figs. 4 to 8, the second guide portion 1022b is configured to be located below the first guide portion 1022a. Specifically, the first guide portion 1022a extends linearly along the Z-axis, the second guide portion 1022b is located in the same vertical plane as the first guide portion 1022a and extends obliquely downward relative to the first guide portion 1022a, forming an obtuse included angle between the two guide portions. When the sliding unit 10222 moves in place along the second guide portion 1022b, the actuating mechanism 1021 is configured to move below the carrying assembly 101 to avoid the passage space of the carrying assembly 101.

According to embodiments of the present disclosure, the guide manner may be conventional guide structures such as guide plates, guide rods, and rails. The first guide portion 1022a and the second guide portion 1022b may be sliding grooves or guide holes formed at the guide unit 10221, or two guide rods with different directions and connected at the ends. The above guide mechanisms are only examples, and those skilled in the art will understand that structures with two guide portions in different directions are included in the protection scope of the present disclosure.

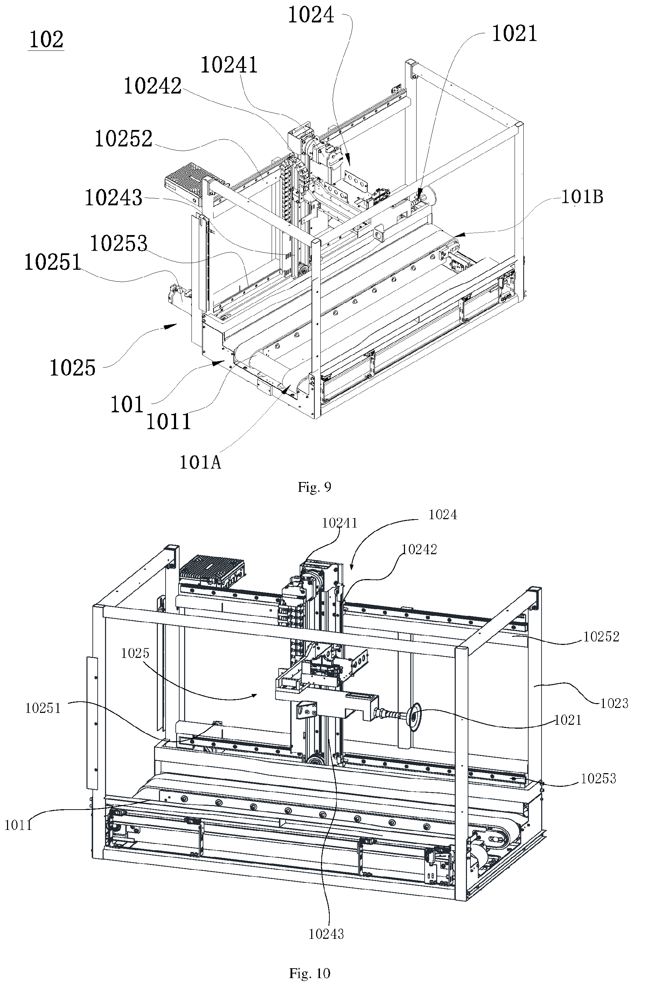

Figs. 9 to 14 are schematic diagrams showing structures of a container pick-and-place assembly according to another embodiment of the present disclosure.

As shown in Figs. 9 to 14, in another embodiment of the present disclosure, the container pick-and-place assembly 102 includes:
an actuating mechanism 1021, located above a carrying surface of the carrying assembly 101, configured to be able to perform a connecting action for connecting to a container or a releasing action for releasing a container;
a support frame 1203 connected to the carrying assembly 101;
a first moving assembly 1024 connected to the support frame 1023 and to the actuating mechanism 1021, the first moving assembly 1024 being configured to be able to drive the actuating mechanism 1021 to lift and lower relative to the support frame 1023 in the Y-axis direction perpendicular to the carrying surface of the carrying assembly 101, such that the actuating mechanism 1021 may be lowered to a pickup position in the passage space 1012 or lifted to an avoidance position capable of avoiding the passage space 1012; and
a second moving assembly 1025 connected to the support frame 1023 and to the actuating mechanism 1021, the second moving assembly 1025 being configured to be able to drive the actuating mechanism 1021 to move, along the Z-axis, toward or away from the first side 101A relative to the support frame 1023, such that the actuating mechanism 1021 moves in the passage space 1012 to load and unload containers.

In the embodiment, as shown in Figs. 9 to 14, illustratively, the first moving assembly 1024 includes:
a first drive motor 10241;
a first support member 10242 arranged along the Y-axis direction, connected to the support frame 1023, and the actuating mechanism 1021 is slidably connected to the first support member 10242;
a first transmission member 10243 connected to the actuating mechanism 1021, and the first transmission member 10243 is configured to be driven by the first drive motor 10241 to drive the actuating mechanism 1021 to slide along the Y-axis direction on the first support member 10242, so as to realize the lifting and lowering of the actuating mechanism 1021 in the Y-axis direction.

In an embodiment, the first support member 10242 may be configured as any suitable structure such as a support plate or a support rod. The first transmission member 10243 may be configured as a transmission structure capable of driving the actuating mechanism 1021 to slide along the first support member 10242, such as a gear-rack structure, a roller guide structure, a synchronous belt structure, or a lead screw structure.

In some embodiments, as shown in Figs. 9 to 14, the second moving assembly 1025 includes:
a second drive motor 10251;
a second support member 10252 arranged along the Z-axis direction, connected to the support frame 1023, and the actuating mechanism 1021 is slidably disposed on the second support member 10252;
a second transmission member 10253 connected to the actuating mechanism 1021, and the second transmission member 10253 is configured to be driven by the second drive motor 10251 to drive the actuating mechanism 1021 to slide along the Z-axis direction on the second support member 10252, so as to realize the movement of the actuating mechanism 1021 along the Z-axis toward or away from the first side.

In an embodiment, the second support member 10252 may be configured as any suitable structure such as a support plate or a support rod. The second transmission member 10253 may be configured as a transmission structure capable of driving the actuating mechanism 1021 to slide along the second support member 10252, such as a gear-rack structure, a roller guide structure, a synchronous belt structure, or a lead screw structure.

In some embodiments, as shown in Figs. 9 to 14, the actuating mechanism 1021 may be connected to the first transmission member 10243 of the first moving assembly 1024, and the first moving assembly 1024 is configured to lift and lower along the second support member 10252, such that the first moving assembly 1024 could carry the actuating mechanism 1021 to move along the Z-axis driven by the second moving assembly 1025.

It could be understood that the above is only an exemplary description of the container pick-and-place assembly 102, and the specific configuration of the container pick-and-place assembly 102 is not limited thereto.

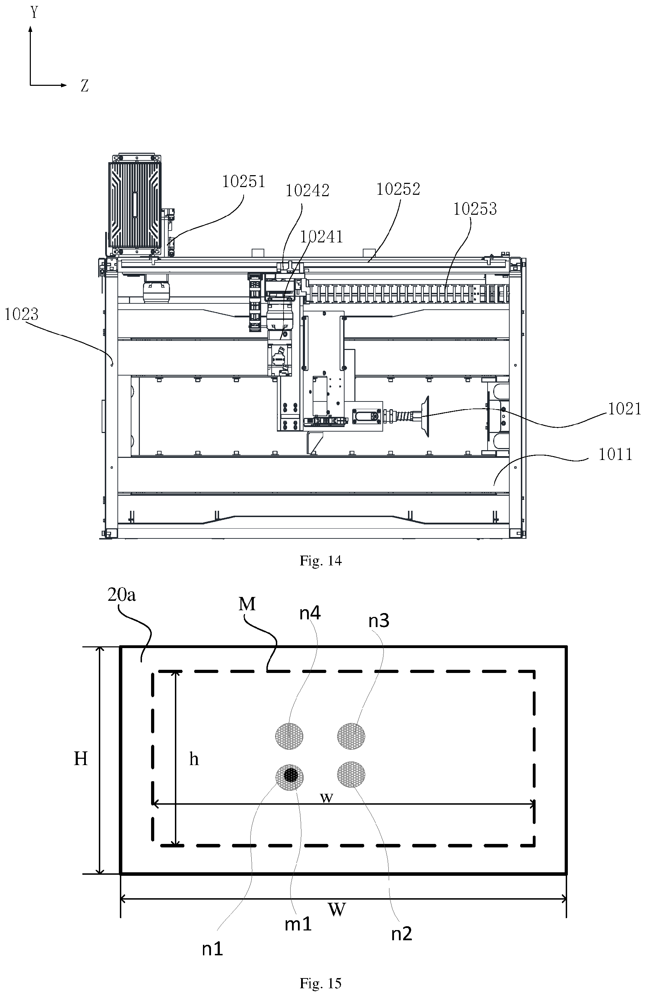

In some embodiments, taking what is shown in Fig. 15 as an example, when the actuating mechanism 1021 includes a plurality of suction cups, the respective orthographic projections of the suction cups on the side surface 20a are denoted as projections n1, n2, n3 and n4, and the projection point of the center of gravity of the container on the preset area M is m1. Then one or more suction cups whose orthographic projections are closest to the projection point m1 of the center of gravity of the container may be vacuumized to suck the container, while suction cups at other positions do not need to be vacuumized. Taking what is shown in Fig. 15 as an example, the projection n1 coincides with the projection point m1 of the center of gravity, so only the suction cup corresponding to the projection n1 can be vacuumized, while the suction cups corresponding to the projections n2, n3 and n4 do not need to be vacuumized.

In an embodiment of the present disclosure, the preset area M may be the same for different types of containers. In another embodiment of the present disclosure, for different types of containers, the control unit 50 is further configured to control a working state of the container pick-and-place assembly 102 based on the center of gravity position of any container, such that a distance between the orthographic projection of the center of gravity position and the engagement position on the side wall 20a is within a threshold value. In this way, the engagement position between the container pick-and-place assembly 102 and the container can be further ensured to be closer to the center of gravity of the container. For example, in the case that the center of gravity of the container is offset to the lower left corner relative to the side wall 20a, the engagement position between the container pick-and-place assembly 102 and the container may be adaptively offset to the lower left corner of the side wall 20a. The threshold value may refer to an allowable distance deviation between the center of gravity and the engagement position during the pulling or pushing of the container by the container pick-and-place assembly 102. Preferably, the threshold value may be 0 or a value close to 0.

In an embodiment of the present disclosure, the container pick-and-place system may further include: an acquisition assembly configured to acquire container information of a container. The container information may include the center of gravity position of the container. The control unit 50 is further configured to determine engagement position information between the container pick-and-place assembly 102 and the container according to the container information fed back by the acquisition assembly, such that the container pick-and-place assembly 102 moves to correspond to the engagement position of the container.

The acquisition assembly may include but is not limited to real-time acquisition components such as weight sensors and image collectors to collect container information in real time. The acquisition assembly may also acquire container information in real time based on a pick-and-place instruction. Specifically, after receiving a service instruction for placing a container, the container pick-and-place system drives the container pick-and-place assembly 102 to move according to the container information of the current container included in the service instruction, and makes the engagement position between the container pick-and-place assembly 102 and the container located within a preset area on the side wall 20a. The container information may be pre-stored in the control unit 50.

In some embodiments, in an embodiment of the present disclosure, the container pick-and-place system is configured to determine engagement position information between the container pick-and-place assembly and the container according to container information, and control the container pick-and-place assembly to move to correspond to the engagement position of the container according to the engagement position information. The container information may include at least one of weight information, center of gravity information, size information and shape information.

In an embodiment of the present disclosure, the container information at least includes weight information, and the warehousing system is configured to determine the engagement position information between the container pick-and-place assembly and the container according to the weight information of the container, and control the container pick-and-place assembly to move to correspond to the engagement position according to the engagement position information.

In some embodiments, in the case of that the container pick-and-place system is configured to determine the engagement position information according to the weight information of the container, the heavier the container, the lower the corresponding engagement position. For different types of containers, the heavier the container, the lower the engagement position between the container pick-and-place assembly and the container in the preset area, which can make the container pick-and-place process more stable.

In an embodiment of the present disclosure, the container information at least includes center of gravity information, and the warehousing system is configured to determine the engagement position information between the container pick-and-place assembly and the container according to the center of gravity information of the container, and control the container pick-and-place assembly to move to correspond to the engagement position according to the engagement position information. In this way, the engagement position could be adjusted to the optimal position based on the center position of the container.

In an embodiment of the present disclosure, the center of gravity information includes offset information of the orthographic projection of the center of gravity of the container on the side wall relative to the center of the side wall; the warehousing system is configured to determine offset information of the engagement position on the side wall according to the offset information. The offset information may include an offset direction and/or an offset amount. For example, if the center of gravity is offset to the lower left, the engagement position is correspondingly offset to the lower left.

In an embodiment of the present disclosure, the container information at least includes size information; the warehousing system is configured to determine the engagement position information between the container pick-and-place assembly and the container according to the size information of the container, and control the container pick-and-place assembly to move to correspond to the engagement position according to the engagement position information. In this way, the engagement position could be adjusted to the optimal position based on the size information of the container. For example, for containers of the same weight, if their sizes are different, the engagement positions may also be different. The engagement position may be adjusted to the optimal position based on the size information of the container.

In an embodiment of the present disclosure, the container information at least includes shape information; the warehousing system is configured to determine the engagement position information between the container pick-and-place assembly and the container according to the shape information of the container, and control the container pick-and-place assembly to move to correspond to the engagement position according to the engagement position information. In this way, the engagement position could be adjusted to the optimal position based on the shape information of the container. For example, for containers of the same weight, if their sizes are the same but shapes are different, the engagement positions may also be different. The engagement position may be adjusted to the optimal position based on the shape information of the container.

In some embodiments, an embodiment of the present disclosure provides a container pick-and-place system, which may include a container load-and-unload device and a control unit. The container load-and-unload device includes a carrying assembly and a container pick-and-place assembly. The carrying assembly includes a conveying mechanism provided with a first side and a second side opposite thereto, and the conveying mechanism is configured to transfer a container at least from the first side to the second side. The container pick-and-place assembly is configured to have an engaged state and a disengaged state; in the engaged state, the container pick-and-place assembly is configured to be engageable with a container to transfer a container located at the first side onto the conveying mechanism or push a container on the conveying mechanism onto the first side; in the disengaged state, the container pick-and-place assembly is configured to be disengageable from the container and avoidable from the passage space. The control unit is specifically configured to: during a transfer of a container located at the first side onto the conveying mechanism, control the container pick-and-place assembly to remain in the engaged state before the container reaches a first preset position; control the container pick-and-place assembly to switch from the engaged state to the disengaged state when the container reaches the first preset position, where the container is configured such that when the container is at the first preset position, a frictional driving force received from the conveying mechanism is greater than a movement resistance received.

In the above embodiments, during the conveyance of a container from the first side to the second side via the conveying mechanism, the container pick-and-place assembly is controlled by the control unit to remain in the engaged state before the container reaches the first preset position so as to pick up the container from the first side; when the container reaches the first preset position, the container pick-and-place assembly is switched from the engaged state to the disengaged state. The container is configured to have the frictional driving force received from the conveying mechanism greater than the movement resistance received, such that during the conveyance of a container from the first side to the second side through the conveying mechanism, when the container reaches the first preset position, the container pick-and-place assembly is disengaged from the container to avoid the passage space provided for containers to pass through. As at this time the container has the frictional driving force received from the conveying mechanism greater than the movement resistance received, it could be smoothly loaded onto the conveying mechanism and conveyed to the second side by the conveying mechanism after disengaged from the container pick-and-place assembly, without the situation that the container cannot be conveyed by the conveying mechanism due to excessive movement resistance, thereby solving the problem of container pickup and delivery failure caused by too short engagement time between the container pick-and-place assembly and the container in the related art.

In an embodiment of the present disclosure, in the engaged state, the container pick-and-place assembly 102 is configured to at least transfer a container in a direction from the first side 101A to the second side 101B.

The control unit 50 is configured to: during the transfer of a container located at the first side 101A onto the conveying mechanism 1011, control the container pick-and-place assembly 102 to remain in the engaged state before reaching the first preset position, and to switch from the engaged state to the disengaged state when the container reaches the first preset position, where the container is configured such that the frictional driving force received from the conveying mechanism 1011 is greater than the movement resistance received when the container is at the first preset position.

After the warehousing system receives a service instruction for picking up a container, the container pick-and-place assembly 102 moves to the first side 101A of the conveying mechanism 1011 and engages with the container to pick up the container from the first side 101A and place it on the conveying mechanism 1011; after the container moves to the first preset position, the container pick-and-place assembly 102 disengages from the container and avoids the passage space 1012, such that the container is completely carried on the conveying mechanism 1011 and passes through the passage space 1012. At this time, the container is conveyed by the conveying mechanism 1011 to the second side 101B, completing the transfer of the container from the first side 101A to the second side 101B.

In the above embodiments, during the conveyance of a container from the first side 101A to the second side 101B via the conveying mechanism 1011, the container pick-and-place assembly 102 remains in the engaged state before the container reaches the first preset position, so as to pick up the container from the first side 101A and place it on the conveying mechanism 1011; when the container reaches the first preset position, the container pick-and-place assembly 102 is switched from the engaged state to the disengaged state. Since the container, at the first preset position, has the frictional driving force received from the conveying mechanism greater than the movement resistance received, the container, at this time, is disengaged from the container pick-and-place assembly 102 and smoothly loaded onto the conveying mechanism 1011 under the frictional driving force of the conveying mechanism 1011, without the situation that the container cannot be conveyed due to the movement resistance, thereby avoiding container pick-and-place failure caused by too short engagement time between the container pick-and-place assembly 102 and the container.

The conveying mechanism 1011 may be configured to drive a container to move by the frictional driving force between itself and the container to convey the container.

In some embodiments, the conveying mechanism 1011 may be a belt conveyor or a roller conveyor.

A belt conveyor is a friction-driven machine for continuously transporting materials, mainly including a frame, a conveyor belt, idlers, rollers, a tensioning device, a transmission device, etc. It can form a material conveying process on a certain conveying line from the initial feeding point to the final discharging point.

A roller conveyor mainly includes rollers, a frame, supports, a driving part, etc. The roller conveyor drives items to move forward by the friction between rotating rollers and the items. Powered roller conveyors are often used for horizontal or slightly upwardly inclined conveying lines. The driving device transmits power to the rollers to rotate them, and the items are conveyed by the friction between the roller surfaces and the conveyed item surfaces. There are separate drive and group drive according to the driving mode. The former is equipped with a separate driving device for each roller for easy disassembly. The latter takes several rollers as a group and is driven by one driving device to reduce equipment cost. The transmission modes of group drive include gear transmission, chain transmission and belt transmission. Powered roller conveyors are generally driven by AC motors, and may also be driven by two-speed motors and hydraulic motors as required.

The container pick-and-place assembly 102 may engage with a container in various ways, including but not limited to snap-fitting, magnetic attachment, vacuum suction via a suction cup, etc. In a specific embodiment, the container pick-and-place assembly 102 includes a suction cup mechanism configured to engage with an end surface of a container to pull or push the container.

When completely loaded onto the conveying mechanism 1011, a container has the movement resistance received less than the frictional driving force received from the conveying mechanism 1011, such that the conveying mechanism 1011 can smoothly convey the container. When a container is only partially loaded onto the conveying mechanism 1011, a part of the container is still located on/at a carrier, docking station, picking station or buffer station, etc., and there is frictional resistance between the carrier, docking station, picking station or buffer station, etc. and the container. If the length of the container loaded onto the conveying mechanism 1011 is too small, the movement resistance received by the container from its own gravity, such as the frictional resistance received by the container from the carrier, docking station, picking station or buffer station, etc., will be greater than the frictional driving force received from the conveying mechanism 1011. Accordingly, the container should be completely loaded or loaded onto the conveying mechanism 1011 with a length being large enough, to ensure that the container moves under the frictional driving force of the conveying mechanism 1011 after disengaged from the container pick-and-place assembly 102.

In an embodiment of the present disclosure, along a conveying direction of the conveying mechanism 1011, a distance between the first preset position and the first side 101A is 1/10 to 4/5 of a total length of the container. That is, when the length of the container loaded onto the conveying mechanism 1011 accounts for 1/10 to 4/5 of the total length of the container, the container pick-and-place assembly 102 could disengage from the container. At this time, the movement resistance received by the container from its own gravity would be less than the frictional driving force received from the conveying mechanism 1011.

For containers with different container information, such as containers with different container weights, container sizes, container materials and container center of gravity positions, the first preset position may be different.

To ensure that the warehousing system could be applied to various types of containers with different container information and can smoothly pick and place different types of containers, the first preset position may be configured such that for any type of container at the first preset position, the frictional driving force received from the conveying mechanism is greater than the movement resistance received, where the container information includes at least one of a total container weight, a container size, a container shape, a container material and a container center of gravity position.

Taking a position where any type of container, during the transfer of the container located at the first side 101A onto the conveying mechanism 1011, receives the frictional driving force from the conveying mechanism 1011 being equal to the movement resistance received the container as a first critical position, different types of containers may correspond to different first critical positions, and the first critical position closest to the second side 101B among the different first critical positions is denoted as a first farthest critical position. Along the conveying direction of the conveying mechanism 1011, the first preset position is located at a side of the first farthest critical position close to the second side 101B.

Specifically, taking four types of containers A, B, C and D with different weights applicable to the warehousing system as an example, the weights or sizes of containers A, B, C and D increase gradually, and the first critical positions corresponding to containers A, B, C and D are position a, position b, position c and position d respectively. The distances from position a, position b, position c and position d to the first side 101A increase gradually, i.e., position d is the first critical position farthest from the first side 101A, denoted as the first farthest critical position, and the first preset position is located at a side of position d away from the first side 101A. In this way, when any type of container among containers A, B, C and D reaches the first preset position, the frictional driving force received from the conveying mechanism 1011 is necessarily greater than the movement resistance received by the container, thereby ensuring that different types of containers could be smoothly conveyed and avoiding container pick-and-place failure.

In an embodiment of the present disclosure, the warehousing system may further include: a detection assembly 104, arranged on a movement path of the container in the passage space 1012, and configured to generate a detection signal representing current pose information of the container. The pose information may include but is not limited to at least one of a container position and container movement speed. The control unit 50 is in communication connection with the detection assembly 104, and the control unit 50 is configured to send a control instruction for controlling a working state of the container pick-and-place assembly 102 and/or the carrying assembly 101 based on the detection signal.

When a container is picked up from the first side 101A and partially loaded onto the conveying mechanism 1011, the detection assembly 104 could detect pose information such as the container position and container movement speed, and the control unit 50 may control the switching between the engaged state and disengaged state of the container pick-and-place assembly 102 based on the detection signal. For example, in the case that the container pick-and-place assembly 102 sucks a container through a suction cup mechanism, based on the detection signal of the detection assembly 104, when the container is detected to reach the first preset position, the control unit 50 may cut off the vacuum source of the suction cup mechanism to release the container. The detection position of the detection assembly 104 may determine when the container pick-and-place assembly 102 releases the container, which may be adjusted according to the design as long as the container could be finally loaded onto the conveying mechanism 1011.

The detection assembly 104 includes but is not limited to sensors, infrared scanning devices, camera devices, etc., and the detection assembly 104 may generate and send a corresponding detection signal when detecting a container. In an embodiment, the detection assembly 104 may be a pressure sensor disposed on the conveying mechanism 1011. When a container moves to a corresponding position of the conveying mechanism 1011, the pressure sensor could detect the pressure of the container and generate a detection signal. In another embodiment, it may be an infrared sensor, etc., which will not be described in detail here.

Specifically, the detection assembly 104 includes a first sensor 1041 located at a position of the conveying mechanism close to the first side 101A, and the first sensor 1041 is configured to generate a detection signal representing position information and/or movement speed information of the container when the container enters and exits the conveying mechanism 1011 from the first side 101A.

In this way, when a container located at the first side 101A is transferred onto the conveying mechanism 1011, the first sensor 1041 may detect at least one of the position information and movement speed information of the container in real time, so as to detect whether the container reaches the first preset position.

In an embodiment, the first sensor 1041 may be arranged at a position corresponding to the first preset position. A container contains a plurality of end surfaces, in which the end surface closest to the second side 101B is configured as a side wall. When the container moves until its side wall reaches the first preset position, the first sensor 1041 may be triggered to generate a detection signal representing that the container reaches the first preset position. At this time, the control unit 50 receives the detection signal fed back by the first sensor 1041 and sends a control instruction to the container pick-and-place assembly 102 to switch the container pick-and-place assembly 102 from the engaged state to the disengaged state.

It should be noted that arranging the first sensor 1041 at the first preset position to detect whether the container reaches the first preset position has a simple and convenient structure. The first sensor 1041 may be any suitable position sensor such as a photoelectric sensor, a pressure-sensitive sensor, or a laser sensor. In other non-illustrated embodiments, the first sensor 1041 may be not limited to a position sensor, and may also be a speed sensor for detecting the current movement speed of the container. In this case, the first sensor 1041 may be arranged at a position corresponding to the first preset position or at an entrance and exit of the passage space 1012 of the conveying mechanism 101 close to the first side 101A. The control unit 50 may calculate a linear movement distance of the container on the conveying mechanism 1011 according to the current movement speed of the container fed back by the first sensor 1041, thereby determining whether the container reaches the first preset position.

In the above embodiments, a sensor is used to detect the position and movement speed of the container to detect whether the container reaches the first preset position. In other non-illustrated embodiments, it is also possible not to use a sensor to determine whether the container reaches the first preset position. For example, the control unit 50 may directly determine the movement speed of the container according to parameters such as the conveying rate of the conveying unit, the container information of the container, etc., and then calculate the linear movement distance of the container to determine whether the container reaches the first preset position. Using a sensor to detect information such as the position or movement speed of the container to detect whether the container reaches the first preset position has a more accurate detection result than calculating and determining the container position according to parameters such as the conveying rate of the conveying unit.

In an embodiment of the present disclosure, the detection assembly 104 may further includes a second sensor located at a middle position of the conveying mechanism 1011 along the conveying direction thereof, and the second sensor is configured to generate a detection signal representing whether a container is currently loaded on the conveying mechanism 1011. In this way, by detecting whether a container is loaded on the conveying mechanism 1011, the conveying mechanism 1011 may be controlled to operate or stop, thus to improve the operation safety of the entire system.

In an embodiment of the present disclosure, the control unit 50 is further configured to: during a transfer of the container from the first side 101A to the second side 101B, control the conveying mechanism 1011 to convey the container in a first conveying direction, with a first conveying rate before the container reaches the first preset position and a second conveying rate after the container reaches the first preset position, the first conveying rate being less than the second conveying rate.

In this way, during the pickup of a container located at the first side 101A onto the conveying mechanism 1011, before the container reaches the first preset position, the conveying rate of the conveying mechanism 1011 may be set to low-speed conveying, to avoid an interference with the container and the container pick-and-place assembly 102 due to excessive conveying rate of the conveying mechanism 1011, and to reduce slippage of the container on the conveying mechanism 1011; after the container pick-and-place assembly 102 disengages from the container, the container pick-and-place assembly 102 avoids the passage space 1012 of the conveying mechanism 1011, and the conveying mechanism 1011 may be controlled to speed up to facilitate the smooth removal of the container from the conveying mechanism 1011 to the second side 101B.

In an embodiment of the present disclosure, in the engaged state the container pick-and-place assembly 102 is further configured to be capable of transferring a container located on the conveying mechanism 1011 to the first side 101A; the control unit 50 is further configured to: control the container pick-and-place assembly 102 to switch from the disengaged state to the engaged state when the container reaches a second preset position during a transfer of the container on the conveying mechanism 1011 to the first side 101A, where the container is configured such that the frictional driving force received from the conveying mechanism 1011 is greater than or equal to the movement resistance received when the container is at the second preset position.

In this way, during the conveyance of a container from the second side 101B to the first side 101A via the conveying mechanism 1011, the container pick-and-place assembly 102 is controlled by the control unit 50 to remain in the disengaged state before the container reaches the second preset position, so as to avoid the passage space 1012 on the conveying mechanism 1011, such that the container is transferred from the second side 101B onto the conveying mechanism 1011.

The control unit 50 controls the container pick-and-place assembly 102 to switch from the disengaged state to the engaged state when the container reaches the second preset position, since the frictional driving force received from the conveying mechanism 1011 is not less than (greater than or equal to) the movement resistance received when the container is at the second preset position, while after the container reaches the second preset position, the frictional driving force from the conveying mechanism 1011 is less than the movement resistance received, making it difficult to transfer the container to the second side 101B only by the conveying mechanism 1011. In this way, it could be ensured that the container is smoothly pushed onto the carrier 31 at the second side 101B under the push of the container pick-and-place assembly 102 and in cooperation with the frictional driving force of the conveying mechanism 1011, thereby further avoiding container pick-and-place failure.

In an embodiment of the present disclosure, the control unit 50 is further configured to: during a transfer of the container from the second side 101B to the first side 101A, control the conveying mechanism 1011 to convey the container in a second conveying direction opposite to the first conveying direction with a third conveying rate, the first conveying rate being less than the third conveying rate.

In the above embodiments, during the transfer of a container located at the second side 101B to the first side 101A, before the container reaches the second preset position, the container pick-and-place assembly 102 is in the disengaged state to avoid the passage space 1012, and the container is conveyed by the conveying mechanism 1011; when the container reaches the second preset position, the container pick-and-place assembly 102 switches to the engaged state to cooperate with the conveying mechanism 1011 to push the container from the conveying mechanism 1011 to the first side 101A. During the transfer of the container from the second side 101B to the first side 101A, the conveying mechanism 1011 is configured for high-speed conveying, which is more conducive to the smooth removal of the container from the conveying mechanism 1011 to the carrier 31 at the first side 101A.

In an embodiment of the present disclosure, along the conveying direction of the conveying mechanism 1011, a distance between the second preset position and the first side 101A is 1/10 to 4/5 of the total length of the container. That is, when the container pick-and-place assembly 102 pushes the container from the conveying mechanism 1011 to the first side 101A, the length of the container loaded on the conveying mechanism 1011 accounts for 1/10 to 4/5 of the total length of the container. For containers with different container information, such as containers with different container weights, container sizes, container materials and container center of gravity positions, the second preset position may be different.

To ensure that the warehousing system can smoothly pick and place different types of containers when applying to various types of containers with different container information, in an embodiment of the present disclosure, when the container load-and-unload device 10 transfers multiple types of containers with different container information, the second preset position is configured such that when any type of container is at the second preset position, a frictional driving force received from the conveying mechanism 1011 is greater than or equal to a movement resistance received, where the container information includes at least one of weight information, size information, shape information and center of gravity position information.

Taking a position where any type of container, during the transfer of the container located on the conveying mechanism 1011 to the first side 101A, receives the frictional driving force from the conveying mechanism 1011 being equal to the movement resistance received the container as a second critical position, different types of containers may correspond to different second critical positions, and the second critical position closest to the second side 101B among the different second critical positions is denoted as a second farthest critical position. Along the conveying direction of the conveying mechanism 1011, the second preset position is located at a side of the second farthest critical position close to the second side 101B.

For example, taking four types of containers A, B, C and D with different weights applicable to the warehousing system as an example, the weights or sizes of containers A, B, C and D increase gradually, and the second critical positions corresponding to containers A, B, C and D are position a, position b, position c and position d respectively. Apparently, the distances from position a, position b, position c and position d to the first side 101A increase gradually, i.e., position d is the second critical position farthest from the first side 101A, denoted as the second farthest critical position, and the second preset position is located at a side of position d away from the first side 101A. In this way, when any type of container among containers A, B, C and D reaches the second preset position, the frictional driving force received from the conveying mechanism 1011 is necessarily greater than or equal to the movement resistance received by the container (namely, any type of container has a frictional driving force at least not less than the movement resistance received), the container pick-and-place assembly 102 cooperates with the container to push the container, thereby ensuring that different types of containers could be smoothly conveyed and avoiding container pick-and-place failure.

In an embodiment of the present disclosure, the container pick-and-place system further includes: an acquisition assembly, configured to acquire container information of the container. The container information includes at least one of a total container weight, a container size, a container shape and a container center of gravity position. The control unit 50 is further configured to determine the first preset position and/or the second preset position based on the container information. In this way, when the warehousing system is adapted to transfer multiple types of containers with different container information, the acquisition assembly may also be used to acquire the container information of the currently transferred container in real time, so as to determine a matching first preset position, second preset position, and/or engagement position between the container pick-and-place assembly and the container for different types of containers.

The acquisition assembly may include but is not limited to acquisition components such as weight sensors and image collectors which could collect container information in real time. The acquisition assembly may also acquire container information in real time based on a pick-and-place instruction.

After receiving a service instruction for picking up a container, according to the container information included in the service instruction the warehousing system drives the container pick-and-place assembly 102 to move to the first side 101A of the conveying mechanism 1011. The container information may be pre-stored in the control unit 50. Taking the warehousing system adapted to transfer different types of containers as an example, the control unit 50 is further configured to pre-store a correspondence between the container information and the first preset position and the second preset position. When the control unit 50 receives the container information fed back by the acquisition assembly, it determines the first preset position and/or the second preset position based on the correspondence.

After receiving a service instruction for placing a container, according to the container information of the current container included in the service instruction the warehousing system drives the container pick-and-place assembly 102 to move and makes the engagement position between the container pick-and-place assembly 102 and the container located within a preset area on the side wall 20a. The container information may be pre-stored in the control unit 50.

In embodiments of the present disclosure, there is further provided a container pick-and-place method, implemented by a container pick-and-place system according to embodiments of the present disclosure, including the following steps:
step S01: during a conveyance of a container from a first side 101A to a second side 101B via a conveying mechanism 1011, a container pick-and-place assembly 102 is controlled by a control unit 50 to remain in an engaged state before reaching a first preset position, and to switch from the engaged state to a disengaged state when the container reaches the first preset position, so as to pick up the container from the first side 101A and place it onto the conveying mechanism 1011.

In the above embodiments, during the conveyance of a container from the first side 101A to the second side 101B via the conveying mechanism 1011, the container pick-and-place assembly 102 remains in the engaged state before the container reaches the first preset position, so as to pick up the container located at the first side 101A from the first side 101A and transfer it onto the conveying mechanism 1011; when the container reaches the first preset position, the container pick-and-place assembly 102 may be disengaged from the container. Since the container, at this time, has the frictional driving force received from the conveying mechanism 1011 greater than the movement resistance received, the container, it could, after disengaged from the container pick-and-place assembly 102, be smoothly conveyed to the second side 101B by the conveying mechanism 1011 under the frictional driving force of the conveying mechanism 1011, thereby avoiding container pick-and-place failure caused by too short engagement time between the container pick-and-place assembly 102 and the container.

In an embodiment of the present disclosure, the method further includes:
step S02: during a conveyance of a container from the second side 101B to the first side 101A via the conveying mechanism 1011, the container pick-and-place assembly 102 is controlled by the control unit 50 to remain in the engaged state before reaching a second preset position, and to switch from the disengaged state to the engaged state when the container reaches the second preset position, so as to push the container from the conveying mechanism 1011 to the first side 101A.

In the above embodiments, during the conveyance of a container from the second side 101B to the first side 101A via the conveying mechanism 1011, the container pick-and-place assembly 102 is controlled by the control unit 50 to remain in the disengaged state before the container reaches the second preset position, so as to avoid the passage space 1012 on the conveying mechanism 1011, such that the container is transferred from the second side 101B onto the conveying mechanism 1011. The control unit 50 controls the container pick-and-place assembly 102 to switch from the disengaged state to the engaged state when the container reaches the second preset position, since the container is configured such that the frictional driving force received from the conveying mechanism 1011 is less than the movement resistance received when the container is at the second preset position, making it difficult to transfer the container to the second side 101B only by the conveying mechanism 1011. In this way, it could be ensured that the container is smoothly pushed onto the carrier 31 at the second side 101B under the push of the container pick-and-place assembly 102 and in cooperation with the frictional driving force of the conveying mechanism 1011, thereby further avoiding container pick-and-place failure.

In an embodiment of the present disclosure, the above step S01 includes: during a transfer of the container from the first side 101A to the second side 101B, controlling the conveying mechanism 1011 to convey the container in a first conveying direction, with a first conveying rate before the container reaches the first preset position and a second conveying rate after the container reaches the first preset position, the first conveying rate being less than the second conveying rate.

With the above embodiment, during the pickup of a container located at the first side 101A onto the conveying mechanism 1011, before the container reaches the first preset position, the conveying rate of the conveying mechanism 1011 may be set to low-speed conveying, to avoid an interference with the container and the container pick-and-place assembly 102 due to excessive conveying rate of the conveying mechanism 1011, and to reduce slippage of the container on the conveying mechanism 1011, since the container pick-and-place assembly 102 would be engaged with the container and moved in the passage space 1012; after the container pick-and-place assembly 102 disengages from the container, the container pick-and-place assembly 102 avoids the passage space 1012 of the conveying mechanism 1011, and the conveying mechanism 1011 may be controlled to speed up to facilitate the smooth removal of the container from the conveying mechanism 1011 to the second side 101B.

In an embodiment of the present disclosure, the above step S02 includes: during a transfer of the container from the second side 101B to the first side 101A, controlling the conveying mechanism 1011 to convey the container in a second conveying direction opposite to the first conveying direction with a third conveying rate, the first conveying rate being less than the third conveying rate.

With the above embodiment, during the transfer of a container located at the second side 101B to the first side 101A, before the container reaches the second preset position, the container pick-and-place assembly 102 is in the disengaged state to avoid the passage space 1012, and the container is conveyed by the conveying mechanism 1011; when the container reaches the second preset position, the container pick-and-place assembly 102 switches to the engaged state to cooperate with the conveying mechanism 1011 to push the container from the conveying mechanism 1011 to the first side 101A together. During the whole transfer of the container from the second side 101B to the first side 101A, the conveying mechanism 1011 may be set with high-speed conveying, which is more conducive to the smooth removal of the container from the conveying mechanism 1011 to the first side 101A.

All embodiments of the present disclosure may be implemented individually or in combination with other embodiments, which are deemed to fall within the scope of protection claimed by the present disclosure.

## Claims

1. A container pick-and-place system, comprising a container load-and-unload device, wherein the container load-and-unload device comprises:
a carrying assembly, configured to convey a container at least in a direction from one side of the container load-and-unload device to the other side of the container load-and-unload device; and
a container pick-and-place assembly, configured to engage with and disengage from an engagement position on a side wall of the container to load and unload the container respectively,
wherein the engagement position is located within a preset area of the side wall, and an orthographic projection of a center of gravity of the container on the side wall is located within the preset area.

2. The container pick-and-place system according to claim 1, wherein, along a conveying direction of the carrying assembly, the engagement position is located on a side wall of the container corresponding to the container pick-and-place assembly.

3. The container pick-and-place system according to claim 1 or 2, wherein, when loaded onto the carrying assembly, the container has opposite top and bottom in a vertical Y-axis direction, and a center of the preset area is offset toward the bottom relative to a center of the side wall.

4. The container pick-and-place system according to claim 3, wherein there are distances between peripheral boundaries of the preset area and peripheral edges of the side wall, and the preset area is configured to satisfy the following conditions: $h 1 / H \geq 1 / 5 ;$ $h 2 / H \geq 1 / 10 ;$ $w 1 / W \geq 1 / 10 ;$ $w 2 / W \geq 1 / 10 ,$ wherein,
h1 is a distance between a top boundary of the preset area and a top edge of the side wall in the Y-axis direction;
h2 is a distance between a bottom boundary of the preset area and a bottom edge of the side wall in the Y-axis direction;
H is a height of the side wall in the Y-axis direction;
W is a width of the side wall in a X-axis direction; and
w1 and w2 are respective distances between two side boundaries of the preset area and two side boundaries of the side wall corresponding thereto in the X-axis direction,
wherein the carrying assembly conveys the container along a Z-axis direction, the X-axis, Y-axis and Z-axis being perpendicular to each other.

5. The container pick-and-place system according to any one of claims 1 to 4, wherein the carrying assembly comprises a passage space for the container to move through; the container pick-and-place assembly comprises:
an actuating mechanism, configured to be capable of performing a connecting action for connecting to the container or a releasing action for releasing the container; and
a movement mechanism, configured to drive the actuating mechanism to move in a first movement trajectory and a second movement trajectory, wherein in the first movement trajectory, the movement mechanism is configured to drive the actuating mechanism to move in the passage space to load and unload the container; in the second movement trajectory, the movement mechanism is configured to drive the actuating mechanism to avoid the passage space, such that the container passes through the passage space.

6. The container pick-and-place system according to any one of claims 1 to 4, wherein the carrying assembly comprises a passage space for the container to move through, with one side of the passage space provided with a pick-and-place port,
the container pick-and-place assembly comprises:
an actuating mechanism, configured to be capable of performing a connecting action for connecting to the container or a releasing action for releasing the container; and
a movement mechanism, configured to drive the actuating mechanism to reciprocate in the passage space to load and unload the container through the pick-and-place port.

7. The container pick-and-place system according to claim 5 or 6, wherein the container load-and-unload device further comprises a moving mechanism, configured to be capable of moving the container pick-and-place assembly in the X-axis direction and the Y-axis direction, such that the actuating mechanism corresponds to the preset area of the container.

8. The container pick-and-place system according to claim 7, wherein the moving mechanism comprises:
a frame body comprising an X-axis rail and a Y-axis rail perpendicular to each other, and the container pick-and-place assembly is configured to move via the X-axis rail and the Y-axis rail, such that the actuating mechanism corresponds to the preset area of the container.

9. The container pick-and-place system according to claim 7, wherein the container pick-and-place assembly comprises at least two actuating mechanisms,
the actuating mechanisms are configured to synchronously perform a connecting action or a releasing action; after the container pick-and-place assembly as configured moves in the X-axis direction and the Y-axis direction to render the actuating mechanism corresponding to the preset area of the container, said at least two actuating mechanisms are configured to synchronously perform a connecting action or a releasing action; or
at least a part of the actuating mechanisms is configured to be capable of independently performing a connecting action or a releasing action; after the container pick-and-place assembly as configured moves in the X-axis direction and the Y-axis direction to render the actuating mechanism corresponding to the preset area of the container, only the actuating mechanism corresponding to the engagement position performs a connecting action.

10. The container pick-and-place system according to any one of claims 1 to 9, wherein the container pick-and-place system is configured to determine engagement position information between the container pick-and-place assembly and the container according to container information, and control the container pick-and-place assembly to move to correspond to the engagement position according to the engagement position information.

11. The container pick-and-place system according to claim 10, wherein the container information at least comprises weight information; the container pick-and-place system is configured to determine the engagement position information between the container pick-and-place assembly and the container according to the weight information of the container, and control the container pick-and-place assembly to move to correspond to the engagement position according to the engagement position information.

12. The container pick-and-place system according to claim 11, wherein, in the case of that the container pick-and-place system is specifically configured to determine the engagement position information according to the weight information of the container, the heavier the container, the lower the corresponding engagement position.

13. The container pick-and-place system according to claim 10, wherein the container information at least comprises center of gravity information; the container pick-and-place system is configured to determine the engagement position information between the container pick-and-place assembly and the container according to the center of gravity information of the container, and control the container pick-and-place assembly to move to correspond to the engagement position according to the engagement position information.

14. The container pick-and-place system according to claim 13, wherein the center of gravity information comprises offset information of the orthographic projection of the center of gravity of the container on the side wall relative to the center of the side wall; the container pick-and-place system is configured to determine offset information of the engagement position on the side wall according to the offset information.

15. The container pick-and-place system according to claim 10, wherein the container information at least comprises size information; the container pick-and-place system is configured to determine the engagement position information between the container pick-and-place assembly and the container according to the size information of the container, and control the container pick-and-place assembly to move to correspond to the engagement position according to the engagement position information.

16. The container pick-and-place system according to claim 10, wherein the container information at least comprises shape information; the container pick-and-place system is configured to determine the engagement position information between the container pick-and-place assembly and the container according to the shape information of the container, and control the container pick-and-place assembly to move to correspond to the engagement position according to the engagement position information.

17. The container pick-and-place system according to any one of claims 1 to 16, wherein the carrying assembly comprises a conveying mechanism provided with a first side and a second side opposite thereto, and the conveying mechanism is configured to transfer the container at least from the first side to the second side;
the container pick-and-place assembly is configured to have an engaged state and a disengaged state; in the engaged state, the container pick-and-place assembly is configured to transfer the container located at the first side onto the conveying mechanism; in the disengaged state, the container pick-and-place assembly is configured to disengage from the container;
the container pick-and-place system further comprises a control unit configured to: control the container pick-and-place assembly to switch from the engaged state to the disengaged state when the container reaches a first preset position during a transfer of the container located at the first side onto the conveying mechanism, wherein the container is configured such that when the container is at the first preset position, a frictional driving force received from the conveying mechanism is greater than a movement resistance received.

18. The container pick-and-place system according to claim 17, wherein, along a conveying direction of the conveying mechanism, a distance between the first preset position and the first side is 1/10 to 4/5 of a total length of the container.

19. The container pick-and-place system according to claim 17 or 18, wherein, when the container load-and-unload device transfers multiple types of containers with different container information, the first preset position is configured such that for any type of container at the first preset position, the frictional driving force received from the conveying mechanism is greater than the movement resistance received, wherein the container information comprises at least one of a total container weight, a container size, a container shape, a container material and a container center of gravity position.

20. The container pick-and-place system according to any one of claims 17 to 19, wherein the container pick-and-place system further comprises: a detection assembly, arranged on a movement path of the container and configured to generate a detection signal representing current position information of the container, wherein the control unit is in communication connection with the detection assembly, and the control unit is configured to send a control instruction for controlling a working state of the container pick-and-place assembly and/or the carrying assembly based on the detection signal.

21. The container pick-and-place system according to claim 20, wherein the detection assembly comprises a first sensor located at a position of the conveying mechanism close to the first side, and the first sensor is configured to generate a detection signal representing position information and/or movement speed information of the container when the container enters and exits the conveying mechanism from the first side.

22. The container pick-and-place system according to claim 20 or 21, wherein the detection assembly comprises a second sensor located at a middle position of the conveying mechanism along the conveying direction thereof, and the second sensor is configured to generate a detection signal representing whether the container is currently loaded on the conveying mechanism.

23. The container pick-and-place system according to any one of claims 17 to 22, wherein the control unit is further configured to: during a transfer of the container from the first side to the second side, control the conveying mechanism to convey the container in a first conveying direction, with a first conveying rate before the container reaches the first preset position and a second conveying rate after the container reaches the first preset position, the first conveying rate being less than the second conveying rate.

24. The container pick-and-place system according to claim 23, wherein the control unit is further configured to: during a transfer of the container from the second side to the first side, control the conveying mechanism to convey the container in a second conveying direction opposite to the first conveying direction with a third conveying rate, the first conveying rate being less than the third conveying rate.

25. The container pick-and-place system according to any one of claims 17 to 24, wherein in the engaged state the container pick-and-place assembly is further configured to be capable of transferring the container located on the conveying mechanism to the first side;
the control unit is further configured to: control the container pick-and-place assembly to switch from the disengaged state to the engaged state when the container reaches a second preset position during a transfer of the container on the conveying mechanism to the first side.

26. The container pick-and-place system according to claim 25, wherein, along the conveying direction of the conveying mechanism, a distance between the second preset position and the first side is 1/10 to 4/5 of the total length of the container.

27. The container pick-and-place system according to claim 25 or 26, wherein, when the container load-and-unload device transfers multiple types of containers with different container information, the second preset position is configured such that when any type of container is at the second preset position, a frictional driving force received from the conveying mechanism is greater than or equal to a movement resistance received, wherein the container information comprises at least one of a total container weight, a container size, a container shape, a container material and a container center of gravity position.

28. The container pick-and-place system according to any one of claims 25 to 27, wherein the container pick-and-place system further comprises: an acquisition assembly, configured to acquire container information of the container, wherein the container information comprises at least one of a total container weight, a container size, a container shape and a container center of gravity position, wherein the control unit is further configured to determine the first preset position, the second preset position, and/or the engagement position between the container pick-and-place assembly and the container based on the container information.

29. A container pick-and-place method, implemented by a container pick-and-place system according to any one of claims 17 to 28, comprising the following steps:
during a conveyance of a container from a first side to a second side via a conveying mechanism, a container pick-and-place assembly is controlled by a control unit to remain in an engaged state before reaching a first preset position, and to switch from the engaged state to a disengaged state when the container reaches the first preset position, so as to pick up the container from the first side and place it onto the conveying mechanism.

30. The method according to claim 29, further comprising the following steps:
during a conveyance of the container from the second side to the first side via the conveying mechanism, the container pick-and-place assembly is controlled by the control unit to remain in the engaged state before reaching a second preset position, and to switch from the disengaged state to the engaged state when the container reaches the second preset position, so as to push the container from the conveying mechanism to the first side.

31. The method according to claim 29, wherein the method comprises: during a transfer of the container from the first side to the second side, controlling the conveying mechanism to convey the container in a first conveying direction, with a first conveying rate before the container reaches the first preset position and a second conveying rate after the container reaches the first preset position, the first conveying rate being less than the second conveying rate.

32. The method according to claim 31, wherein the method comprises: during a transfer of the container from the second side to the first side, controlling the conveying mechanism to convey the container in a second conveying direction opposite to the first conveying direction with a third conveying rate, the first conveying rate being less than the third conveying rate.

33. A warehousing system, comprising:
a carrier parking area for parking a carrier carrying a container;
a docking area; and
a container pick-and-place system according to any one of claims 1 to 28, wherein the carrier parking area and the docking area are respectively located at two sides of a container load-and-unload device, a carrying assembly is configured to convey the container between the docking area and the carrier, and a container pick-and-place assembly is configured to load and unload the container between the carrier and the carrying assembly and/or between the docking area and the carrying assembly.

34. The warehousing system according to claim 33, wherein the docking area comprises a workstation comprising at least one picking station.
